# EUROPEAN PATENT APPLICATION

(11) **EP 1 524 588 A1**
(43) Date of publication of application: **20.04.2005**
(21) Application number: 03023091.6
(22) Date of filing: 15.10.2003
(51) Int. Cl.: G06F 3/033, H04M 1/247

(54) **User input device for a portable electronic device**

(71) Applicant: Sony Ericsson Mobile Communications AB, 221 88 Lund (SE)
(72) Inventor: Tsegay, Kahsay, 245 63 Hjärup (SE)
(74) Representative: Dahnér, Christer

(57) **Abstract**

The present invention is directed towards a user input control device for a portable electronic device such as a cellular phone. The user input control device comprises a co-ordinate reading unit (12) providing a co-ordinate signal representative of a coordinate in at least a two dimensional plane X-Y in which the co-ordinate reading unit (12) can move,
a control unit (14) coupled to said co-ordinate reading unit (12) for reading and interpreting said co-ordinate signal to determine movement in said at least two dimensional plane X-Y, providing a processed signal such that a difference in pixels can be determined and
output means (30) coupled to said control unit (14) for receiving said processed signal and making it available for further processing in the portable communication device for user input control. In this way varied scrolling speeds that can be fully controlled by a user in a simple manner are provided.

## Description

### TECHNICAL FIELD OF THE INVENTION

The present invention relates to the field of a user input control device including a co-ordination axis reader for a portable electronic device, and more particularly to a device for user input control for a portable communication device.

### DESCRIPTION OF RELATED ART

In a portable electronic device, such as a cellular phone, user input control commands are entered to the portable electronic device from an alfa-numerical calculator style keyboard, whereby a particular keystroke, or combination of keystrokes, is interpreted by the portable electronic device as a command for instance a movement of a cursor or the like to the right, left, up or down. In many portable electronic devices, special keys are devoted to these functions and can be located in a keys separated from the conventional alfa-numerical calculator style keypad. Some portable electronic devices also include joysticks, paddles, balls, touch panels, touch screens or the like to provide user input control commands for instance provided for playing a game.

For playing a game in a portable electronic device such as a cellular phone, joysticks are perhaps the most widely known user input control devices among other things due to their widespread use in video games. These joysticks can for instance be of the analogue or fixed axis type. The simplest analogue joysticks comprise a pair of potentiometers mechanically coupled to a movable handle at right angles to each other. The potentiometers form part of a voltage divider network and as the handle is moved, provide analogue signals representing the X and Y coordinate position of the handle. The analogue signals may then be further processed and converted to digital form by the cellular phone to locate a pointer for instance. The pointer can thus be positioned by a user manipulating the handle.

The prior art user input control devices typically require a user to click on a key or to manipulate a handle or the like. Other touch sensitive user input devices such as touch screens typically require significant arm motion and concominant time delay for their use. Thus, extended use of touch screens or the like is very tiresome.

In the phones of today, there does not to the best of our knowledge exist the possibility to play games without manual clicks or the like. This is a disadvantage, because in best case the user misses the key or press the wrong key, and it can often be tiresome for the user and sometimes it is the cause of a "mouse arm feeling" because of many clicks. Thus the prior art user input control devices may often be a cause of frustration for a user thereof. In short there is a great need to provide a user input control device which overcomes the described deficiency while at the same time being effective, convenient and easy to use, i. e. typically does not require clicks on a key or manual manipulation. There is also a need for a universal input control device to meet the requirements and desires of various users.

### SUMMARY OF THE INVENTION

The present invention is thus directed towards providing a user input control device that can be fully controlled by a user in a simple manner without clicks or manual manipulation.

This is achieved by a user input control device for a portable communication device comprising a co-ordinate reading and interpreting unit that figures out movements in a plane having at least two dimension, so that said movement is made available for further processing in the portable communication device for user input control.

One object of the present invention is to provide a user input control device that can be fully controlled by a user in a simple manner.

According to a first aspect of the present invention, this object is achieved by a user input control device for a portable communication device, said user input control device comprising:
a co-ordinate reading unit providing a co-ordinate signal representative of a coordinate in at least a two dimensional plane X-Y in which the co-ordinate reading unit can move,
a control unit coupled to said co-ordinate reading unit for reading and interpreting said co-ordinate signal to determine movement in said at least two dimensional plane X-Y, providing a processed signal such that a difference in pixels can be determined and
output means coupled to said control unit for receiving said processed signal and
making it available for further processing in the portable communication device for user input control.

A second aspect of the present invention is directed to a device including the features of the first aspect, wherein .

A third aspect of the present invention is directed towards

A fourth aspect of the present invention is directed towards

A fifth aspect of the present invention is directed towards a device including the features of the fourth aspect, wherein .

A sixth aspect of the present invention is directed towards .

A aspect of the present invention is directed towards .

A seventh aspect of the present invention is directed towards a device including the features of the eleventh aspect, wherein .

The invention has the following advantages. For instance, it gives a user comfort, easiness and a cool-feeling when playing games on the phone. The invention is also very inexpensive to implement, because it can be implemented using the camera already provided in the device and the co-ordination reading function can be provided with just some extra software in addition to the camera software already existing.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
Fig. 1 shows a front view of a portable electronic device in the form of a cellular phone provided with a co-ordinate reading unit in the form of a camera, and
Fig. 2 shows a block schematic of the relevant parts of the invention inside the cellular phone in Fig. 1, and
Fig. 3 shows a flow chart of a main control routine for the control unit used in the device according to the invention.

### DETAILED DESCRIPTION OF EMBODIMENTS

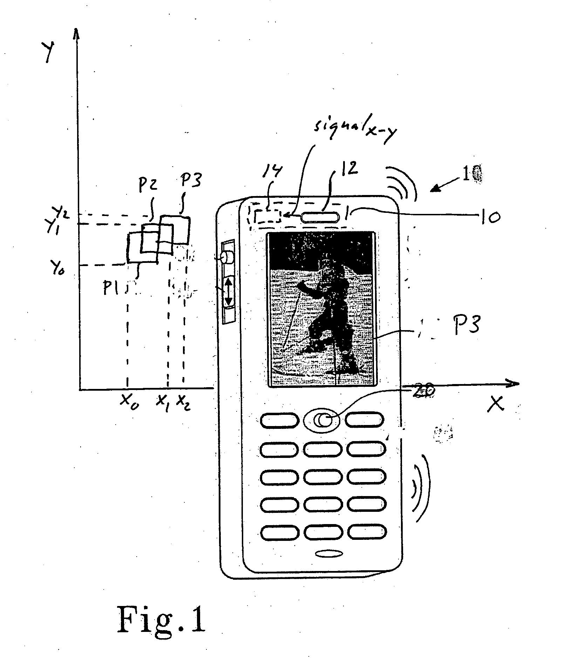

A device according to an embodiment of the invention, which here is a portable electronic device 1 is shown in a perspective front view in Fig. 1. The portable electronic device 1 is moving in a co-ordinate plane X-Y to the right and up (illustrated by fringes). In the preferred embodiment the portable electronic device 1 is a cellular phone provided with a user input control device 10 according to an embodiment of the invention. The user input control device 10 comprises a co-ordinate reading unit 12 herein in the form of a built-in camera known per se providing a co-ordinate signal *signal*_{X-Y},. The user input control device 10 can also include another co-ordinate reading unit besides a camera, which may be part of or connected to the camera, for providing co-ordination information. Also an accessory snap-on camera or the like may be provided (not shown). The user input control device 10 further comprises a control unit 14 coupled to said co-ordinate reading unit 12 for reading and interpreting said co-ordinate signal *signal*_{X-Y} to determine movement in said at least two dimensional plane X-Y, such that a pixel difference can be determined. The cellular phone 1 further comprises a conventional switch key 20 for activating-deactivating the inventive function, i. e. shifting from conventional camera mode to the invention. This switch key 20 is optional and may be excluded.

Each of the elements shown in Fig. 1 and some additional elements are discussed in more detail below with reference to the remaining figures.

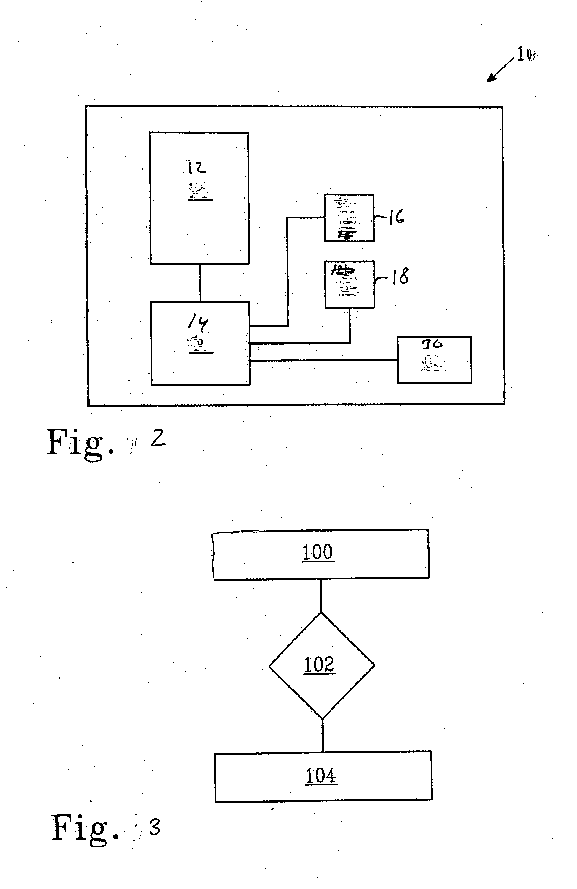

Fig. 2 shows a block schematic of the different parts of the cellular phone 1. The cellular phone comprises the co-ordinate reading unit 12 (and optionally further coordinate reading units) coupled to the control unit 14, which is coupled to a store 16. To the control unit 14 is also connected to a distance to target measuring unit 18, which may be the conventional focusing unit in the camera.

The control unit 14 is normally provided in the form of one or more processors with corresponding store 16 such as a program memory containing suitable software code.

A preferred embodiment of the present invention will now be explained with reference to fig. 1, and 2. This embodiment is also believed to be the best mode of the invention at the moment.

The co-ordinate reading unit 12, herein a conventional built-in camera shoots pictures at high speed of which a first picture, a second picture and a third picture P1, P2, P3 are shown, whereby the second picture P2 is superposed on the first picture P1, and the third picture P3 is superposed on the second picture P2 as illustrated in Fig. 1, step 100. Herein the first picture P1 is a reference having co-ordinates x0-y0. The difference in the number of pixels between x0-xn and y0-yn (where n=1, 2) co-ordinates corresponds to a distance of movement. In case the co-ordinate reading unit 12, i. e. the camera, is moved in any other direction than in the two dimensional plane, the distance measuring unit 18 takes also this movement into account by measuring distance to target in a way known per se. Because of simplicity this situation is not further described herein, thus only a two-dimensional movement is considered.

The control unit 14 coupled to the co-ordinate reading unit 12, then reads and interprets the co-ordinate signal from the camera 12, i. e. the pixel difference between consequtive pictures, step 102, to determine movement in the two dimensional plane X-y and provides a processed signal, step 104, which is transmitted to an output 30 coupled to said control unit for receiving said processed signal and makes it available for further processing in the portable cellular phone, for instance for providing a corresponding movement in a game that is played.

The present invention has many advantages. It allows a user to get full control of the user input device for instance when playing a game such as boll rolling in a maze game, which he would not otherwise have. One alternative less satisfactory way to play games is for example to play with joysticks or keypads as controllers. It is often not good to provide this type of solution though, because the user might either miss or press wrong buttons besides that it gives the user a hurting feeling a so-called "mousy arm" because of many clicks that has negative influence as regards comfort etc.

By providing the control with the camera, there is furthermore no need for any additional buttons or consols, which may provide a bulky design.

The present invention can be varied in many ways.

The invention was described in relation to a cellular phone. A cellular phone is just one example of a device in which the invention can be implemented. The invention can for instance also be used in a PDA (personal digital assistant), a palm top computer a lap top computer and a regular PC. Therefore the present invention is only to be limited by the following claims.

## Claims

1. User input control device for a portable communication device, said user input control device (10) comprising:
a co-ordinate reading unit (12) providing a co-ordinate signal representative of a co-ordinate in at least a two dimensional plane X-Y in which the co-ordinate reading unit (12) can move,
a control unit (14) coupled to said co-ordinate reading unit (12) for reading and interpreting said co-ordinate signal to determine movement in said at least two dimensional plane X-Y, providing a processed signal such that a difference in pixels can be determined and
output means (30) coupled to said control unit (14) for receiving said processed signal and making it available for further processing in the portable communication device for user input control.

2. Device (10) according to claim 1, wherein the co-ordination reading unit (12) is a camera arranged to provide a number of consequtive pictures (p1, P2, P3).

3. Device according to claim 1, wherein the co-ordination reading unit comprises a distance to target measuring unit (18).

4. Device according to claim 2, further comprising means (20) for selecting-deselecting co-ordination reading mode.

5. Portable electronic device comprising a user input control device, said user input control device (10) comprising:
a co-ordinate reading unit (12) providing a co-ordinate signal representative of a co-ordinate in at least a two dimensional plane X-Y in which the co-ordinate reading unit (12) can move,
a control unit (14) coupled to said co-ordinate reading unit (12) for reading and interpreting said co-ordinate signal to determine movement in said at least two dimensional plane X-Y, providing a processed signal such that a difference in pixels can be determined and
output means (30) coupled to said control unit (14) for receiving said processed signal and making it available for further processing in the portable communication device for user input control.

6. Device according to claim 5, wherein the device is a portable communication device.

7. Device according to claim 6, wherein the device is a cellular phone.
